# FASCICULE DE BREVET EUROPEEN

(11) **EP 1 674 430 B1**
(45) Date de publication et mention de la délivrance du brevet: **04.03.2009**
(21) Numéro de dépôt: 05292785.2
(22) Date de dépôt: 23.12.2005
(51) Int. Cl.: C02F 3/04, C02F 3/32

(54) **Dispositif d'épuration d'eaux usées et procédé mettant en oeuvre le dispositif**
Vorrichtung zur Behandlung von Abwasser und Verfahren das sie verwendet
Apparatus for the treatment of wastewater and process using it

(30) Priorité: 24.12.2004 EP 04293129
(43) Date de publication de la demande: 28.06.2006
(73) Titulaire: Epur Nature, 84510 Caumont sur Durance (FR)
(72) Inventeur: Pietri, Christian, 13840 Rognes (FR); Leboeuf, Vincent, 84740 Velleron (FR); Esser, Dirk, 73370 La Chapelle du Mont du Chat (FR)
(74) Mandataire: Chajmowicz, Marion

(56) Documents cités:
- EP-A- 0 010 473
- DE-A1- 4 116 144
- FR-A- 1 477 417
- FR-A- 2 690 683
- GB-A- 1 333 585
- US-A- 3 765 535
- US-A- 5 122 287

## Description

Le domaine de la présente invention est celui du traitement des eaux usées, notamment domestiques ou industrielles. Plus particulièrement, l'invention concerne un dispositif d'épuration des eaux usées comprenant plusieurs couches successives de matériaux particulaires, notamment une couche de sable ou analogue, et un moyen permettant la diffusion d'air ou d'oxygène disposé à la surface de ladite couche de sable et destiné à éviter son colmatage. Elle concerne également une station d'épuration et un procédé d'épuration d'eaux usées mettant en oeuvre un tel dispositif.

Les dispositifs décrits dans l'art antérieur pour le traitement des eaux usées sont essentiellement constitués de deux filtres distincts fonctionnant en série, constituant respectivement un premier et un deuxième étage de traitement dont les différentes couches présentent une granulométrie croissante du haut vers le bas (cf. Etude bibliographique agence de l'eau RMC 1999 ; Document n°22 du FNDAE). Les filtres sont alimentés par bâchée. Les caractéristiques principales des deux étages, rappelées ci-dessous, sont bien connues et abondamment décrites.

Le filtre type premier étage permet de combiner un traitement primaire à un début de traitement secondaire. Le traitement primaire consiste en une filtration physique et en une stabilisation aérobie (sur la surface) des matières en suspension filtrées. Le traitement secondaire consiste en une dégradation de la pollution dissoute à l'intérieur du filtre.
Le filtre type premier étage est constitué de couches de granulométries successives différentes croissantes du haut (la surface du filtre) vers le bas (le fond du filtre). Il comprend généralement une couche supérieure de gravier de granulométrie 1/10 mm et de 0,40 m à 1 m d'épaisseur. Cette couche comprend parfois une aération intermédiaire constituée de drains munis de fentes tournées vers le bas. En dessous de la première couche décrite ci-dessus sont disposées une succession de une ou plusieurs couches de granulométrie croissante (couche de gravier de granulométrie 10/20 mm ou 15/25 mm par exemple et d'environ 0,2 m d'épaisseur). Ce filtre comprend enfin, en-dessous des couches précédentes, une couche de gravier de granulométrie 20/40 à 30/60 mm. Un système de drainage communique avec l'atmosphère par un système de cheminées remontant à la surface du filtre.

Le filtre type deuxième étage permet d'améliorer la qualité du rejet en sortie du filtre de type premier étage. Le deuxième étage est constitué de couches de granulométrie plus fine. Une première couche de sable de granulométrie 0/6 mm et de 0,20 à 0,40 m d'épaisseur, est toujours disposée en surface, à l'air libre, de façon à avoir une oxygénation maximale du massif filtrant et une dégradation aérobie des dépôts organiques non retenus sur le filtre de type premier étage. C'est sur cette couche de sable que s'effectue l'essentiel de la filtration complémentaire. Une aération intermédiaire (drains munis de fentes tournées vers le bas) est parfois située entre la couche de sable et une couche inférieure de gravier de granulométrie supérieure à celle du sable. Cette couche de gravier, généralement de granulométrie 1/10 mm, a une épaisseur de 0,10 m à 0,40 m. En dessous de cette dernière couche sont disposées une succession de une ou plusieurs couches de granulométrie croissante (couche de gravier de granulométrie 10/20 mm ou 15/25 mm), et, en-dessous des couches précédentes, une couche de gravier de granulométrie 20/40 à 30/60 mm. Un système de drainage communique avec l'atmosphère par des cheminées remontant à la surface du filtre.

Les demandes de brevet français FR2801805 et internationale WO 00/10927 décrivent des exemples de filtres de ce type, utilisés dans l'art antérieur.

La demande de brevet WO 00/10927 décrit une cellule de filtration-compostage dont la surface est plantée de roseaux et qui comporte des couches successives de matériaux de remplissage et de sable (couche de cailloux recouverte d'une couche de gravier et d'une couche de sable). Les effluents, avant de traverser la cellule de filtration-compostage, sont pré-traités via un dégrillage fin (maille 3 mm) ou un tamisage (maille 6 mm) permettant d'éliminer les déchets divers.

La demande de brevet français FR2801805 décrit un dispositif d'épuration des eaux usées par filtration-percolation de type massif filtrant permettant le traitement d'eaux usées avec une réduction des émissions d'odeurs gênantes et une réduction de l'espace occupé. Ce dispositif comprend un moyen pour filtrer les eaux usées, un moyen de couverture amovible, formant barrière anti-odeur, laissant passer au moins en partie le rayonnement solaire à l'intérieur du dispositif, et disposé au-dessus du moyen pour filtrer les eaux usées, et un moyen de circulation d'air à travers le moyen pour filtrer les eaux usées. Le moyen pour filtrer les eaux usées comprend une couche inférieure de gravier pour le drainage des effluents et l'aération, une couche intermédiaire de gravier plus fin que celui de la couche inférieure pour l'aération et la nitrification et une couche supérieure de sable pour la fixation des bactéries. Le moyen de circulation d'air est situé entre la couche de sable (couche supérieure) et la couche intermédiaire et communique avec l'espace formé sous le moyen de couverture (cf. Fig. 3 de FR2801805).

Le brevet US 5,122,1287 décrit un dispositif de filtration ayant 3 compartiments comprenant des matériaux particulaires de granulométrie décroissante et des moyens pour injecter de l'air sous pression disposés à l'intérieur de chacun des compartiments.

Le brevet FR 1477417 décrit un appareil garni d'une masse granulaire comprenant, à la base, des couches-supports de grains sur lesquelles repose une masse filtrante constituée de grains à grosseur décroissante et à densité croissante vers le bas.

La demande de brevet français FR2690683 décrit un filtre de type premier étage intégrant une couche de sable. Au contraire des filtres décrits ci-dessus, la couche de sable n'est pas disposée à la surface du filtre. La couche de sable représente 60% en volume des matériaux de remplissage, les 4 autres couches représentant respectivement 10% de ce volume. La couche la plus basse est une couche drainante à base de galets. Une aération supplémentaire facultative est parfois prévue. Elle est constituée d'un conduit enterré dans les couches de remplissage qui n'aère pas la couche de sable.

Ainsi, FR2690683 concerne une installation d'épuration biologique d'eaux résiduaires, et en particulier d'élimination de la pollution azotée comprenant des réacteurs (R1 et R2 au moins) constitués par des bassins d'infiltration dans lesquels sont plantés des végétaux supportant une partie de la biomasse fermentaire utile. Les réacteurs sont agencés en terrasses ou en étages, de manière à exploiter la gravité pour la circulation des fluides. Le réacteur R1 comprend 4 à 5 couches superposées, la deuxième couche (du haut vers le bas du dispositif) étant une couche de sable. La Figure 2 de FR2690683 représente une installation d'épuration comprenant un conduit d'oxygénation et d'aération (présenté comme facultatif dans la description) enterré sous les couches de remplissage de R1. Le colmatage de la couche de sable est un problème fréquemment rencontré lors de la mise en oeuvre de ce type d'installation et qui exige un travail mécanique et un remplacement relativement fréquent des couches de surface.

Les inventeurs ont constaté que le colmatage survenant lors de l'utilisation d'une installation semblable au dispositif décrit FR2690683 se produit au niveau de l'interface entre la partie inférieure d'une couche de granulométrie donnée et la surface de la couche de sable de granulométrie inférieure située en dessous.

Afin d'augmenter la durée de vie de la couche de sable d'un matériau filtrant, la demande EP 0 010 473 A1 suggère d'insuffler du gaz oxygéné dans la couche de charbon actif située au-dessus d'elle. La demande DE 41 16 144 A1 décrit par ailleurs un filtre comprenant une couche en matière fine et au-dessus d'elle une couche en matériau plus grossier, un système d'injection d'oxygène étant situé entre les deux couches. Les inventeurs constatent toutefois, en pratique, une diminution rapide du taux d'oxygène lorsqu'on s'éloigne du système d'injection d'oxygène.

L'invention se propose de remédier aux carences et aux imperfections de l'art antérieur et a notamment pour objet de fournir un dispositif d'épuration d'eaux usées économique, efficace en terme de filtration et dans lequel le colmatage de la couche de sable (ou analogue) est limité ou ne se produit pas.

Le dispositif selon l'invention est économique dans la mesure où il n'impose pas de disposer d'une surface de terrain étendue au contraire des dispositifs se présentant sous la forme d'étages, éventuellement disposés en terrasses, utilisés dans l'art antérieur. Ces étages sont en effet remplacés, dans le cadre de l'invention, par un dispositif se présentant sous la forme d'une unité de traitement. La présence de plusieurs unités n'est pas obligatoire. L'efficacité de filtration des effluents du dispositif selon l'invention est au moins semblable à celle obtenue en combinant un filtre de type premier étage avec un filtre de type deuxième étage et bien supérieure à celle d'un filtre de type premier étage isolé.

L'invention concerne ainsi un dispositif d'épuration d'eaux usées, de type massif filtrant, comprenant (i) un moyen destiné à filtrer les eaux usées comprenant une couche C2 de matériau particulaire et une couche C1 de matériau particulaire située de préférence directement au-dessus de ladite couche C2, la granulométrie de la couche C2 étant inférieure à la granulométrie de la couche C1 et (ii) un moyen permettant la diffusion d'air ou d'oxygène disposé à l'interface entre lesdites couches C1 et C2 et comprenant au moins une couche de matériau particulaire de granulométrie supérieure à la granulométrie de la couche C2 et supérieure à la granulométrie de la couche C1 ledit moyen permettant la diffusion d'air ou d'oxygène comprenant en outre un système d'aération de la couche C2 communiquant avec l'atmosphère via une ou plusieurs cheminée(s) remontant à la surface du dispositif, destiné, en réduisant ou en supprimant les conditions anaérobies, à éviter le colmatage de la couche C2.

Une caractéristique importante de l'invention réside dans le fait que la couche C2 n'est pas disposée à la surface du dispositif.

L'invention concerne par ailleurs une station d'épuration comprenant un dispositif selon l'invention.

L'invention concerne aussi un procédé de traitement d'eaux usées mettant en oeuvre un dispositif selon l'invention.

### DESCRIPTION DETAILLEE DE L'INVENTION

Un dispositif d'épuration d'eaux usées, de type massif filtrant, comprenant (i) un moyen destiné à filtrer les eaux usées comprenant une couche C2 de matériau particulaire et une couche C1 de matériau particulaire située de préférence directement au-dessus d'elle, la granulométrie de la couche C2 étant inférieure à la granulométrie de la couche C1 et (ii) un moyen permettant la diffusion d'air ou d'oxygène disposé à l'interface entre lesdites couches C1 et C2 comprenant au moins une couche de matériau particulaire de granulométrie supérieure à la granulométrie de la couche C2 et de préférence également supérieure à la granulométrie de la couche C1 est décrit dans le cadre de la présente demande.

L'intérêt de l'invention est d'obtenir un niveau de rejet des impuretés au moins semblable à celui obtenu en combinant un filtre de type premier étage avec un filtre de type deuxième étage tout en évitant le colmatage du sable ou de la couche utilisée à la place du sable. Le dispositif selon l'invention constitue une unité de traitement. Il ne nécessite pas l'intervention de zones distinctes séparées, éventuellement disposées en étages ou en terrasses et requérant une surface importante. Il est donc plus facile à construire et à mettre en oeuvre.

Le moyen destiné à filtrer les eaux usées comprend plusieurs couches, de préférence au moins 2, encore plus préférentiellement au moins 3, 4 ou 5 couches. Les couches sont par exemple constituées de tout matériau particulaire, de nature minérale ou chimique, tel que du sable, du gravier, des galets ou analogues. Le matériau est choisi en fonction de la granulométrie souhaitée. Une caractéristique importante de l'invention réside dans le fait que la couche C2 dont la granulométrie est la plus faible, n'est pas disposée en surface.

Le présent texte décrit plus particulièrement un dispositif d'épuration d'eaux usées, de type massif filtrant, caractérisé en ce qu'il comprend (i) un moyen pour filtrer les eaux usées comprenant des couches de granulométrie successives différentes organisées du haut vers le bas de la façon suivante :
- une couche C1 de matériau particulaire,
- une couche C2 de matériau particulaire de granulométrie inférieure à la granulométrie de la couche C1,
- éventuellement, une couche C3 de matériau particulaire de granulométrie identique à la granulométrie de la couche C1 ou supérieure,
- éventuellement, une couche C4 de matériau particulaire de granulométrie supérieure à la granulométrie de la couche C3 (ou de la couche C1 si la couche C3 est absente), et
- éventuellement, une couche C5 de matériau particulaire de granulométrie supérieure à la granulométrie de la couche C4,
et (ii) un moyen permettant la diffusion d'air ou d'oxygène compris entre la couche C1 et la couche C2 et comprenant au moins une couche de matériau particulaire de granulométrie supérieure à la granulométrie de la couche C2 et de préférence également supérieure à la granulométrie de la couche C1.

Le moyen (i) destiné à filtrer les eaux usées comprend au moins 2 ou 3 couches, de préférence au moins 4 couches, encore plus préférentiellement au moins 5 couches. Les couches peuvent être constituées, comme indiqué précédemment, de sable, gravier, galets ou analogues par exemple, en fonction de la granulométrie souhaitée. La couche C2 n'est jamais disposée en surface.

Dans la suite du texte, l'expression « environ » associée à l'épaisseur des couches ou à la granulométrie de ces dernières doit être comprise comme englobant les valeurs décrites ± 20%.

La première couche C1 peut comprendre un matériau particulaire ayant une granulométrie d'environ 1/10 mm, éventuellement 2/10 mm, 2/6 mm ou 3/8 mm. Par « couche de granulométrie d'environ 1/10 mm », il faut comprendre, au sens de la présente invention, une couche constituée de matériau particulaire contenant un mélange de particules dont le diamètre ou la taille peut être hétérogène d'une particule à l'autre, et est compris entre 1 et 10 mm. La couche C1 est avantageusement constituée de gravier ou d'un analogue. Son épaisseur est comprise entre environ 0,05 m et environ 1 m de préférence entre environ 0,20 m et environ 0,6 m.

L'épaisseur de la couche C2 est comprise entre environ 0,1 m et environ 1 m, de préférence entre environ 0,15 m et environ 0,4 m, encore plus préférentiellement entre environ 0,2 m et environ 0,3 m. La granulométrie du matériau particulaire constitutif de la couche C2 est généralement comprise entre 0,1 et 8 mm. Elle est de préférence d'environ 0,1/6 mm, 1/6 mm, 1/5 mm, 0,1/4 mm, voire 0,1/2 mm. Cette couche est avantageusement constituée de sable ou d'un analogue.

L'épaisseur des couches situées en dessous de la couche C2 décrite ci-dessus (e.g., C3, C4, C5 dans le dispositif décrit ci-dessus) est comprise entre environ 0,10 m et environ 0,5 m, 1m, voire 2m, de préférence entre environ 0,10 m et environ 0,4 m, encore plus préférentiellement entre environ 0,2 m et environ 0,3 m. La couche C3 est, comme indiqué précédemment, préférentiellement constituée de matériau particulaire de granulométrie identique à la granulométrie de la couche C1 ou supérieure. Les couches C4 et C5 sont généralement constituées de matériaux particulaires ayant une granulométrie d'environ 10/80 mm. La granulométrie d'une même couche peut être d'environ 10/20 mm, 10/25 mm, 15/25 mm, 20/40mm, 30/60 mm ou 40/80 mm. La granulométrie des couches situées sous C2 est croissante du haut vers le bas (fond du dispositif). Ces couches sont avantageusement constituées de graviers, galets ou analogue.

La granulométrie, la nature chimique et l'épaisseur des couches successives ainsi que le gradient de leur taille sont fonction du type d'effluent à traiter et sont susceptibles d'être facilement choisis par l'homme du métier.

Un dispositif particulier d'épuration d'eaux usées, de type massif filtrant, décrit ici, comprend (i) un moyen pour filtrer les eaux usées comprenant des couches de granulométrie successives différentes organisées du haut vers le bas de la façon suivante :
- une couche C1 de gravier ou analogue de granulométrie d'environ 1/10 mm, de préférence d'environ 2/6 mm,
- une couche C2 de sable ou analogue de granulométrie d'environ 0,1/6 mm,
- éventuellement, une couche C3 de gravier ou analogue identique à la première couche C1,
- éventuellement, une couche C4 de gravier ou analogue de granulométrie d'environ 10/25 mm, de préférence d'environ 10/20 mm ou d'environ 15/25 mm, et
- éventuellement, une couche C5 de gravier ou analogue de granulométrie d'environ 20/60 mm, de préférence d'environ 20/40 mm ou d'environ 30/60 mm, et
(ii) un moyen permettant la diffusion d'air ou d'oxygène compris entre la couche C1 de gravier ou analogue et la couche C2 de sable ou analogue et comprenant au moins une couche de matériau particulaire de granulométrie supérieure à la granulométrie de la couche C2 et de préférence également supérieure à la granulométrie de la couche C1.

Le moyen permettant la diffusion d'air ou d'oxygène (ii), comprenant au moins une couche de matériau particulaire de granulométrie supérieure à la granulométrie de la couche C2 et de préférence également supérieure à la granulométrie de la couche C1, peut être passif ou actif (air ou oxygène injecté sous pression), continu ou alternatif, et recouvre tout ou partie de la couche C2. Il permet de créer, à la surface de la couche intermédiaire C2 dont la granulométrie est inférieure à la granulométrie de la couche C1 située de préférence directement au-dessus d'elle, des conditions d'aération les plus proches possibles de l'atmosphère. Il peut s'agir d'un système d'aération communiquant avec l'atmosphère via une ou plusieurs cheminée(s) remontant à la surface du dispositif d'épuration.

Un ou des moyens de diffusion d'air ou d'oxygène supplémentaires peuvent également être présents dans la couche C2 ou sous cette dernière.

Comme indiqué ci-dessus, le moyen permettant la diffusion d'air ou d'oxygène peut être un moyen actif, e.g., il peut être avantageusement équipé d'un système d'injection d'air ou d'oxygène sous pression (par exemple alimenté par un compresseur etc.) ou d'un ventilateur. le moyen permettant la diffusion d'air ou d'oxygène peut également être un réseau sous pression (donc ne communicant pas forcément avec l'atmosphère) alimenté par un compresseur ou un surpresseur. Ce système peut être asservi à une horloge, une sonde à oxygène, une sonde redox etc.

Le moyen permettant la diffusion d'air ou d'oxygène comprenant au moins une couche de matériau particulaire de granulométrie supérieure à la granulométrie de la couche C2 et de préférence également supérieure à la granulométrie de la couche C1, de préférence des graviers, galets ou analogues, peut en outre comprendre, par exemple, une ou plusieurs couches supplémentaires de granulométrie supérieure à la granulométrie de la couche C2 et de préférence également supérieure à la granulométrie de la couche C1, un drain agricole, un drain routier, un tuyau fendu ou percé, un plancher creux, un caisson creux et /ou une structure alvéolaire, etc. Les tuyaux utilisés pourront être en PVC, polyéthylène, polypropylène, inox ou tout autre matériau.

Préférentiellement, la couche de matériau particulaire de granulométrie supérieure à la granulométrie de la couche C2 et de préférence également supérieure à la granulométrie de la couche C1 a une épaisseur comprise entre environ 0,1 m et environ 1m, de préférence entre environ 0,2 m et environ 0,4 m, encore plus préférentiellement entre environ 0,1 m et environ 0,2 m. La granulométrie du matériau particulaire constitutif de cette couche est généralement comprise entre environ 5 mm et environ 80 mm. La granulométrie de cette couche peut être d'environ 10/20 mm, 10/25 mm, 15/25 mm, 20/40mm, 30/60 mm ou 40/80 mm.

Dans un dispositif particulier décrit ici, le moyen permettant la diffusion d'air ou d'oxygène comprend au moins une, de préférence deux couches différentes de matériau particulaire de granulométrie supérieure à la granulométrie de la couche C2 et de préférence également supérieure à la granulométrie de la couche C1, et, de préférence, un tuyau fendu ou percé, par exemple, disposé dans cette ou ces couches de matériau particulaire. Le tuyau fendu ou percé peut être disposé directement à la surface de la couche C2 ou se situer jusqu'à 0,3 m environ au-dessus de celle-ci. Il se situe, de préférence, à une distance comprise entre 0,05 m et 0,3 m au-dessus de la couche C2, par exemple à au moins 0,1 m environ au-dessus de la couche C2. Le tuyau fendu ou percé peut encore, par exemple, être situé au milieu de la couche ou entre les deux couches de matériau particulaire de granulométrie supérieure à la granulométrie de la couche C2.

Lorsque le moyen permettant la diffusion d'air ou d'oxygène comprend deux couches de matériau particulaire de granulométrie supérieure à la granulométrie de la couche C2 et de préférence également supérieure à la granulométrie de la couche C1, la première couche (en partant du haut du dispositif) présente préférentiellement une épaisseur d'environ 0,2 m et comprend un matériau particulaire dont la granulométrie peut être d'environ 10/25 mm ou 15/25 mm et la deuxième couche présente également préférentiellement une épaisseur d'environ 0,2 m et comprend un matériau particulaire dont la granulométrie est supérieure à celle de la première couche et peut être d'environ 20/40 mm ou 30/60 mm.

Les dispositifs décrits ci-dessus peuvent en outre comprendre un moyen d'injection d'air ou d'oxygène sous pression pour décolmater la surface de la couche C2 (avantageusement constituée de sable) et améliorer l'apport d'air ou d'oxygène. Un tel dispositif peut s'avérer utile après une utilisation intensive du dispositif selon l'invention et/ou pour nettoyer le moyen (ii) permettant la diffusion d'air ou d'oxygène.

Le dispositif selon l'invention est préférentiellement équipé d'un réseau de drainage permettant d'évacuer les eaux traitées et préférentiellement situé en fond, i.e., dans la couche la plus basse du dispositif. Le moyen permettant la diffusion d'air ou d'oxygène (ii) est ainsi de préférence relié ou connecté au réseau de drainage du dispositif, ce qui permet, en cas de débit d'eau à traiter trop important, d'évacuer l'excédent d'eau filtré à travers la couche C1 (qui sinon risquerait de remonter à travers la couche C1) et de ne pas surcharger la surface de la couche C2. Ceci contribue à éviter ou à réduire l'installation de conditions anaérobies favorables au colmatage de la surface de la couche C2. Un tel dispositif permet de pratiquer régulièrement ou occasionnellement un ressuyage complet de la surface de la couche C2 lorsqu'une alimentation intensive du dispositif en eau s'est produite. La mise au repos du dispositif favorise la réapparition de conditions aérobies.

Un dispositif préféré selon l'invention comprend ainsi un moyen permettant la diffusion d'air ou d'oxygène et, de préférence, un moyen d'évacuation des eaux en excès vers un réseau de drainage du dispositif, ledit moyen permettant la diffusion d'air ou d'oxygène étant de préférence muni dudit moyen d'évacuation des eaux en excès. Un tel moyen d'évacuation peut par exemple comprendre un dispositif à hauteur réglable, i.e., dont le réglage (à la portée de l'homme du métier) permet l'évacuation des eaux en excès vers le réseau de drainage ce qui lui assure une fonction de trop-plein. Un tel dispositif à hauteur réglable peut être, par exemple, un tuyau coudé orientable.

Le dispositif selon l'invention peut donc fonctionner avec des surcharges occasionnelles d'eau sans remettre en cause la pérennité de la couche de sable.

La surface du dispositif selon l'invention peut avantageusement être plantée de roseaux, par exemple *Phragmitis australis*, qui ont à la fois :
- un effet de déshydratation des boues par évapotranspiration,
- un effet de floculation des matières organiques dissoutes,
- un effet mécanique de décolmatage par les rhizomes,
- un effet d'oxygénation et de contrôle de la microflore dans le massif.
Ces roseaux assurent l'oxygénation de l'effluent en surface.

Le dispositif selon l'invention peut également comprendre, outre les couches décrites précédemment, une couche de nature organique, compost ou boues de station d'épuration par exemple, située à la surface de la première couche C1. Une telle couche organique se forme naturellement après la mise en route du dispositif selon l'invention grâce au dépôt provenant des eaux usées. Il est néanmoins possible de la constituer artificiellement dès le démarrage de l'installation afin d'améliorer le pouvoir filtrant de la couche C1. Cette couche possède une épaisseur comprise entre environ 0,05 m et 0,5 m, de préférence entre environ 0,05 m et 0,2 m.

Un autre objet de l'invention concerne une station d'épuration comprenant un dispositif selon l'invention tel que décrit précédemment.

A l'intérieur de la station d'épuration, le dispositif selon l'invention peut être présent à raison de plus d'une unité, de préférence à raison de 2 ou 3 unités, qui fonctionnent en alternance. Le dispositif peut être alimenté par bâchées successives. Il est préférentiellement alimenté par le dessus en effluents et, comme indiqué préalablement, équipé d'un réseau de drainage de préférence en fond du dispositif. Les effluents peuvent avantageusement être préalablement dégrillés avec une maille comprise par exemple entre 10 et 40 mm.

Un autre objet de l'invention concerne un procédé de traitement d'eaux usées mettant en oeuvre un dispositif selon l'invention tel que décrit précédemment.

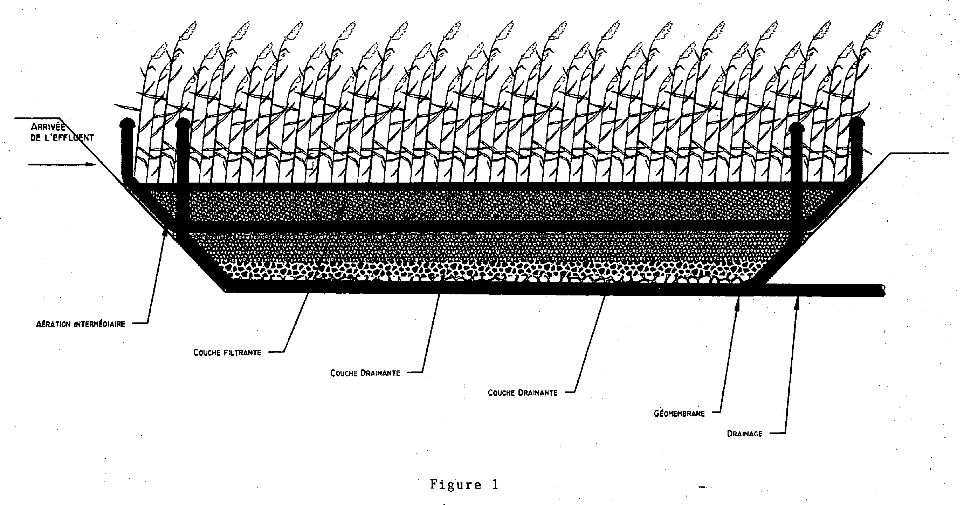

La **Figure 1** est une coupe d'un filtre type premier étage comprenant une aération intermédiaire.

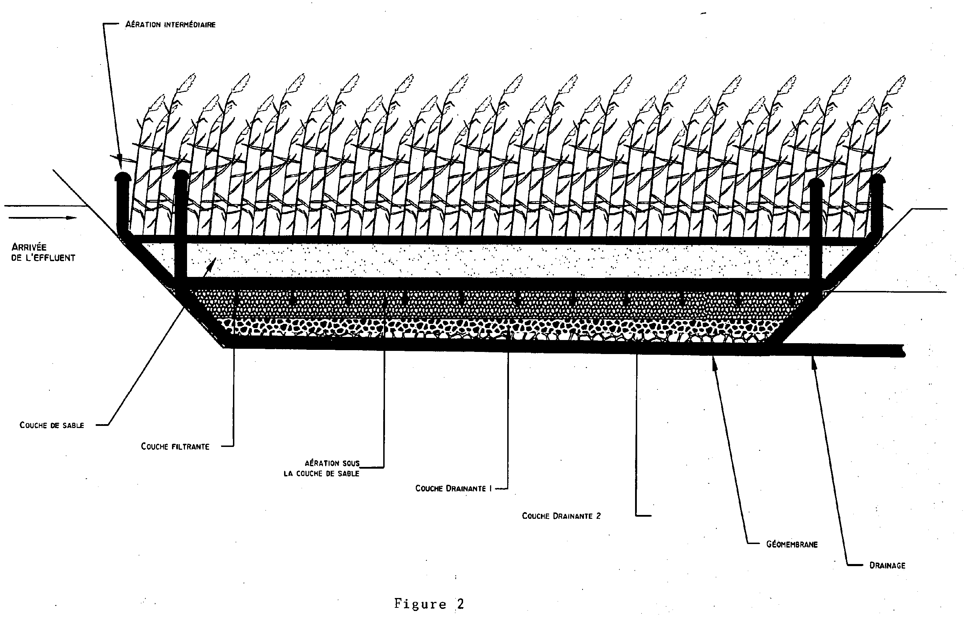

La **Figure 2** est une coupe d'un filtre type deuxième étage comprenant une aération intermédiaire.

La **Figure 3** est une coupe d'un dispositif d'épuration d'eaux usées décrit dans le cadre du présent texte .

La **Figure 4** est une coupe d'un dispositif d'épuration d'eaux usées décrit dans le cadre du présent texte.

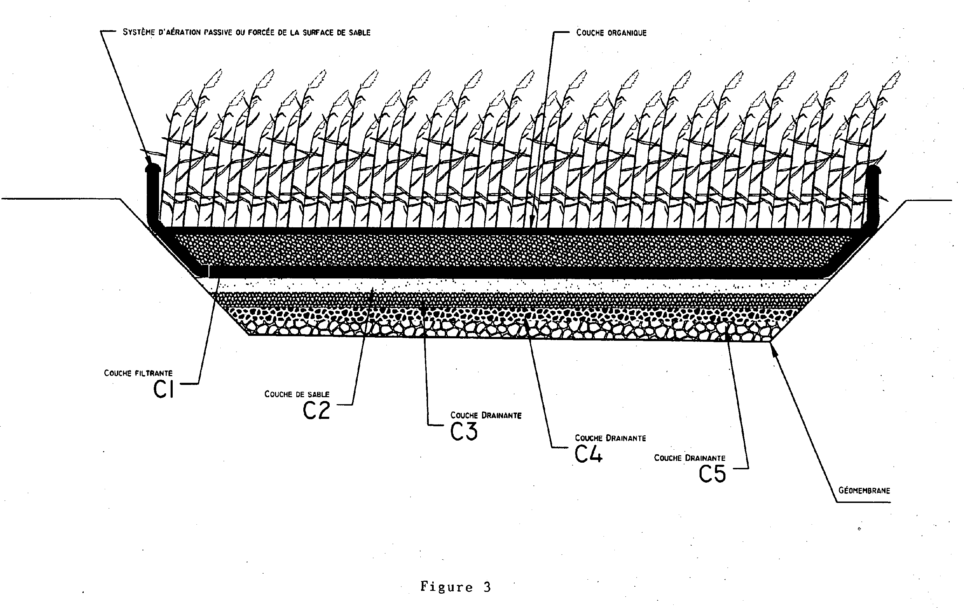

Dans l'exemple de réalisation montré à la Figure 3, le dispositif d'épuration d'eaux usées, de type massif filtrant, comprend (i) un moyen pour filtrer les eaux usées comprenant des couches de granulométrie successives différentes organisées du haut vers le bas de la façon suivante :
- une première couche C1 de gravier de granulométrie d'environ 1/10 mm,
- une deuxième couche C2 de sable de granulométrie d'environ 0/6 mm,
- une troisième couche C3 de gravier identique à la première couche C1,
- une quatrième couche C4 de gravier de granulométrie d'environ 10/20 mm ou 15/25 mm,
- une cinquième couche C5 de gravier de granulométrie d'environ 20/40 mm ou d'environ 30/60 mm, et
(ii) un moyen permettant la diffusion d'air ou d'oxygène compris entre la première couche de gravier C1 et la couche de sable C2.
La surface du dispositif est plantée de roseaux. Le dispositif comprend en outre une couche de nature organique disposée à la surface de la première couche C1 de gravier de 0,05 à 0,2 m d'épaisseur.

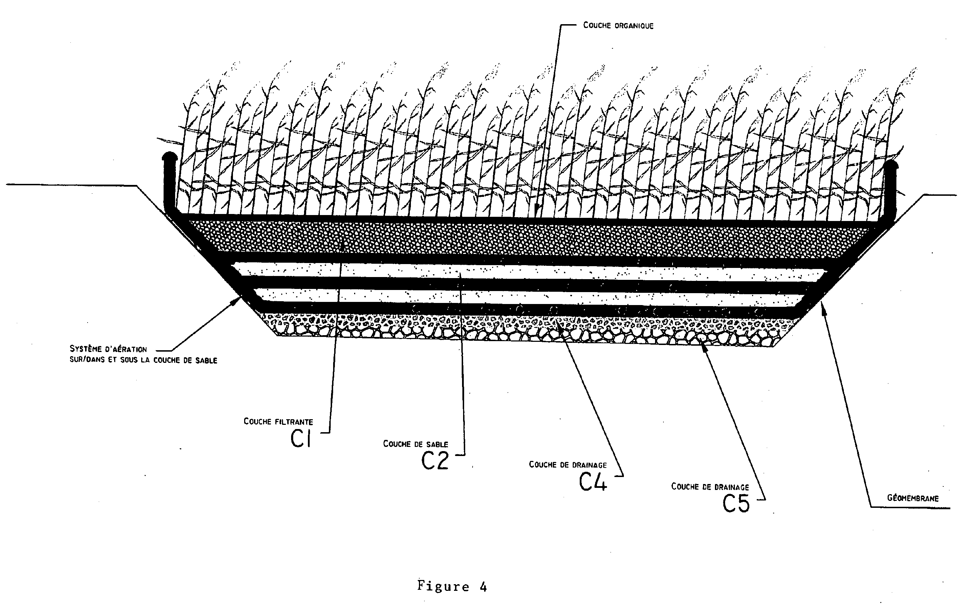

Dans l'exemple de réalisation montré à la Figure 4, le dispositif d'aération est disposé à la fois à la surface, à l'intérieur et sous la couche de sable C2. Le reste du dispositif se distingue du dispositif représenté sur la figure 3 en ce qu'il ne comprend pas de couche de type C3 (telle que décrite ci-dessus).

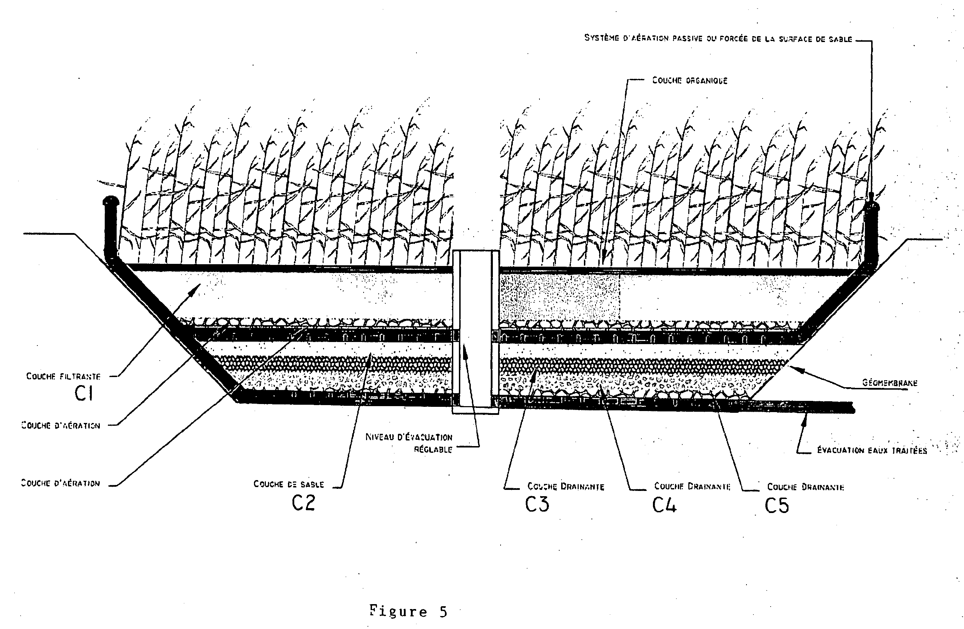

La **Figure 5** est une coupe d'un dispositif d'épuration d'eaux usées conforme à l'invention.

Dans l'exemple de réalisation montré à la figure 5, le dispositif d'épuration d'eaux usées, de type massif filtrant, conforme à l'invention comprend (i) un moyen pour filtrer les eaux usées comprenant des couches de granulométrie successives différentes organisées du haut vers le bas de la façon suivante :
- une première couche C1 de gravier de granulométrie d'environ 1/10 mm,
- une deuxième couche C2 de sable de granulométrie d'environ 0,1/6 mm,
- une troisième couche C3 de gravier identique à la première couche C1,
- une quatrième couche C4 de gravier de granulométrie d'environ 10/20 mm ou 15/25 mm,
- une cinquième couche C5 de gravier de granulométrie d'environ 20/40 mm ou d'environ 30/60 mm, et
(ii) un moyen permettant la diffusion d'air ou d'oxygène, i.e., la couche d'aération, compris entre la première couche de gravier C1 et la couche de sable C2, composé d'une couche de gravier de 0,1 m d'épaisseur de granulométrie d'environ 10/20 mm ou d'environ 15/25 mm, et d'une couche de gravier de 0,2 m d'épaisseur de granulométrie d'environ 20/40 mm ou d'environ 30/60 mm.

La surface du dispositif est plantée de roseaux. Le dispositif comprend en outre une couche de nature organique de 0,05 à 0,2 m d'épaisseur disposée à la surface de la couche C1 de gravier.

Dans l'exemple de réalisation montré à la figure 5, le dispositif d'aération peut servir de système d'évacuation aux effluents qui ne s'infiltreraient pas dans C2. Il s'agit d'un système d'évacuation réglable.

## Revendications

1. Dispositif d'épuration d'eaux usées, de type massif filtrant, comprenant (i) un moyen destiné à filtrer les eaux usées comprenant une couche C2 de matériau particulaire et une couche C1 de matériau particulaire située au-dessus de ladite couche C2, la granulométrie de la couche C2 étant inférieure à la granulométrie de la couche C1 et (ii) un moyen permettant la diffusion d'oxygène disposé à l'interface entre lesdites couches C1 et C2 et comprenant au moins une couche de matériau particulaire de granulométrie supérieure à la granulométrie de la couche C2 et supérieure à la granulométrie de la couche C1, ledit moyen permettant la diffusion d'air ou d'oxygène comprenant en outre un système d'aération de la couche C2 communiquant avec l'atmosphère via une ou plusieurs cheminée(s) remontant à la surface du dispositif.

2. Dispositif d'épuration d'eaux usées selon la revendication 1, dans lequel le moyen permettant la diffusion d'oxygène comprend au moins deux couches de matériau particulaire de granulométries différentes, supérieures à la granulométrie de la couche C2 et de la couche C1, de préférence des graviers ou des galets.

3. Dispositif d'épuration d'eaux usées selon la revendication 2, dans lequel l'épaisseur de chaque couche de matériau particulaire du moyen permettant la diffusion d'oxygène est d'environ 0,2 m, la première couche comprenant un matériau particulaire dont la granulométrie est comprise entré environ 10 et 25 mm ou 15 et 25 mm et la deuxième couche comprenant un matériau particulaire dont la granulométrie est supérieure à celle de la première couche.

4. Dispositif d'épuration d'eaux usées selon la revendication 3, dans lequel la granulométrie de la deuxième couche de matériau particulaire du moyen permettant la diffusion d'oxygène est comprise entre environ 20 et 40 mm ou 30 et 60 mm.

5. Dispositif d'épuration d'eaux usées selon l'une des revendications 1 à 4, dans lequel le moyen (i) pour filtrer les eaux usées comprend des couches de granulométrie successives différentes organisées du haut vers le bas de la façon suivante :
- une couche C1 de matériau particulaire,
- une couche C2 de matériau particulaire de granulométrie inférieure à la granulométrie de la couche C1,
- une couche C3 de matériau particulaire de,granulométrie identique à la granulométrie de la couche C1 ou supérieure,
- éventuellement, une couche C4 de matériau particulaire de granulométrie supérieure à la granulométrie de la couche C3, est
- éventuellement, une couche C5 de matériau particulaire de granulométrie supérieure à la granulométrie de la couche C4,
et le moyen (ii) permettant la diffusion d'air ou d'oxygène, compris entre la couche C1 et la couche C2, comprenant au moins une couche de matériau particulaire de granulométrie supérieure à la granulométrie de la couche C2 et supérieure à la granulométrie de la couche C1, ledit moyen permettant la diffusion d'air ou d'oxygène comprenant en outre un système d'aération de la couche C2 communiquant avec l'atmosphère via une ou plusieurs cheminée(s) remontant à la surface du dispositif.

6. Dispositif d'épuration d'eaux usées selon l'une quelconque des revendications précédentes dans lequel la couche C1 comprend un matériau particulaire ayant une granulométrie comprise entre environ 1 et 10 mm, de préférence des graviers ou des galets.

7. Dispositif d'épuration d'eaux usées selon l'une quelconque des revendications précédentes dans lequel la couche C2 comprend un matériau particulaire ayant une granulométrie comprise entre environ 0,1 et 6 mm.

8. Dispositif d'épuration d'eaux usées selon l'une quelconque des revendications précédentes dans lequel la couche C2 est constituée de sable.

9. Dispositif d'épuration d'eaux usées selon l'une quelconque des revendications 6 à 8 dans lequel la couche C4 comprend un matériau particulaire ayant une granulométrie comprise entre environ 10 et 25 mm, de préférence entre environ 10 et 20 mm ou entre environ 15 et 25 mm, de préférence des graviers ou des galets.

10. Dispositif d'épuration d'eaux usées selon l'une quelconque des revendications 6 à 9 dans lequel la couche C5 comprend un matériau particulaire ayant une granulométrie comprise entre environ 20 et 60 mm, de préférence entre environ 20 et 40 mm ou entre environ 30 et 60 mm, de préférence des graviers ou des galets.

11. Dispositif selon l'une quelconque des revendications précédentes dans lequel le moyen permettant la diffusion d'air ou d'oxygène est équipé d'un ventilateur ou d'un système d'injection d'air ou d'oxygène alimenté par un compresseur.

12. Dispositif selon l'une quelconque des revendications précédentes comprenant un ou des moyens de diffusion d'air ou d'oxygène supplémentaires présents dans la couche C2 ou sous cette dernière.

13. Dispositif selon l'une des revendications précédentes dans lequel le moyen permettant la diffusion d'air ou d'oxygène comprend un drain agricole, un drain routier, un tuyau fendu ou percé, un plancher creux, un caisson creux et/ou une structure alvéolaire.

14. Dispositif selon l'une quelconque des revendications 9 à 13 comprenant en outre un moyen d'injection d'air sous pression pour décolmater la surface du sable et améliorer l'apport d'air ou d'oxygène.

15. Dispositif selon l'une quelconque des revendications précédentes, comprenant un moyen d'évacuation des eaux en excès vers un réseau de drainage du dispositif.

16. Dispositif selon la revendication 15, dans lequel le moyen permettant la diffusion d'air ou d'oxygène est muni du moyen d'évacuation des eaux en excès vers un réseau de drainage du dispositif.

17. Dispositif selon la revendication 15 ou 16, dans lequel le moyen d'évacuation comprend un dispositif à hauteur réglable.

18. Dispositif selon l'une quelconque des revendications précédentes, dans lequel l'épaisseur de la couche C1 est comprise entre environ 0,20 m et environ 0,6 m.

19. dispositif selon l'une quelconque des revendications précédentes, dans lequel l'épaisseur de la couche C2 est comprise entre environ 0,15 m et environ 0,4 m.

20. Dispositif selon l'une quelconque des revendications 4 à 19, dans lequel l'épaisseur des couches C3, C4 et C5 est comprise entre environ 0,10 m et environ 0,4 m.

21. Dispositif selon l'une quelconque des revendications précédentes, dans lequel la surface du dispositif est plantée de roseaux.

22. Dispositif selon l'une quelconque des revendications précédentes, dans lequel le dispositif comprend en outre une couche de nature organique à la surface de la couche C1.

23. Station d'épuration comprenant un dispositif selon l'une quelconque des revendications 1 à 22.

24. Procédé de traitement d'eaux usées mettant en oeuvre un dispositif selon l'une quelconque des revendications 1 à 22.

## Claims

1. A gravel packing type device for purifying wastewater, comprising (i) a means intended to filter wastewater comprising a C2 layer made of particulate material and a C1 layer made of particulate material located above said C2 layer, the particle size of the C2 layer being lower than the particle size of the C1 layer and (ii) a means allowing oxygen diffusion located at the interface of said C1 and C2 layers and comprising at least one layer made of particulate material with a particle size larger than the C2 layer particle size and larger than the C1 layer particle size, said means allowing air or oxygen diffusion further comprising a system for ventilating the C2 layer in connection with the atmosphere via one or more air shafts up to the surface of the device.

2. The device for purifying wastewater according to claim 1, wherein the means allowing oxygen diffusion comprises at least two layers made of particulate material of different particle sizes, larger than the C2 layer and C1 layer particle size, preferably gravel stones or pebbles or cobbles.

3. The device for purifying wastewater according to claim 2, wherein the thickness of each layer made of particulate material of the means allowing oxygen diffusion is of about 0.2 m, the first layer comprising a particulate material the particle size of which is between about 10 and 25 mm or 15 and 25 mm and the second layer comprising a particulate material the particle size of which is larger than the particle size of the first layer.

4. The device for purifying wastewater according to claim 3, wherein the particle size of the second layer made of particulate material of the means allowing oxygen diffusion is between about 20 and 40 mm or 30 and 60 mm.

5. The device for purifying wastewater according to anyone of claims 1 to 4, wherein the means (i) for filtering wastewater comprises successive layers of different particle sizes organized from the top to the bottom in the following way:
- a C1 layer made of particulate material,
- a C2 layer made of particulate material with a lower particle size than the particle size of the C1 layer,
- a C3 layer made of particulate material with a particle size identical to or larger than the particle size of the C1 layer,
- optionnaly, a C4 layer made of particulate material with a larger particle size than the particle size of the C3 layer, and
- optionnaly, a C5 layer made of particulate material with a larger particle size than the particle size of the C4 layer,
and the means (ii) allowing air or oxygen diffusion, located between the C1 layer and C2 layer, comprising at least one layer made of particulate material with a larger particle size than the particle size of the C2 layer and larger than the particle size of the C1 layer, said means allowing allowing air or oxygen diffusion further comprising a system for ventilating the C2 layer in connection with the atmosphere via one or more air shafts up to the surface of the device.

6. The device for purifying wastewater according to anyone of the preceding claims wherein the C1 layer comprises a particulate material with a particle size between about 1 and 10 mm, preferably gravel stones or pebbles or cobbles.

7. The device for purifying wastewater according to anyone of the preceding claims wherein the C2 layer comprises a particulate material with a particle size between about 0.1 and 6 mm.

8. The device for purifying wastewater according to anyone of the preceding claims wherein the C2 layer is made of sand.

9. The device for purifying wastewater according to anyone of claims 6 to 8 wherein the C4 layer comprises a particulate material with a particle size between about 10 and 25 mm; preferably between about 10 and 20 mm or between about 15 and 25 mm, preferably gravel stones or pebbles or cobbles.

10. The device for purifying wastewater according to anyone of claims 6 to 9 wherein the C5 layer comprises a particulate material with a particle size between about 20 and 60 mm; preferably between about 20 and 40 mm or between about 30 and 60 mm, preferably gravel stones or pebbles or cobbles.

11. The device according to anyone of the preceding claims wherein the means allowing air or oxygen diffusion is equipped with a fan or with an air or oxygen injection system powered by an air compressor.

12. The device according to anyone of the preceding claims comprising one or more additional air or oxygen diffusion means present in the C2 layer or under the latter.

13. The device according to anyone of the preceding claims wherein the means allowing air or oxygen diffusion comprises an agricultural drain, a roadbed drain, a cracked or pierced pipe, a hollow floor, a hollow caisson and/or a cellular structure.

14. The device according to anyone of claims 9 to 13 further comprising a means for injecting air under pressure in order to unclog the sand surface and improve the air or oxygen supply.

15. The device according to anyone of the preceding claims, comprising a means of draining excess water towards a drainage network of the device.

16. The device according to claim 15, wherein the means allowing air or oxygen diffusion is provided with the means for draining excess water towards a drainage network of the device.

17. The device according to claim 15 or 16, wherein the draining means comprises a height-adjustable device.

18. The device according to anyone of the preceding claims, wherein the thickness of the C1 layer is between about 0.20 m and about 0.6 m.

19. The device according to anyone of the preceding claims, wherein the thickness of the C2 layer is between about 0.15 m and about 0.4 m.

20. The device according to anyone of claims 4 to 19, wherein the thickness of the C3, C4 and C5 layers is between about 0.10 m and about 0.4 m.

21. The device according to anyone of the preceding claims, wherein the surface of the device is planted with reeds.

22. The device according to anyone of the preceding claims, wherein the device further comprises a layer of organic nature at the surface of the C1 layer.

23. A wastewater treatment plant comprising a device according to anyone of claims 1 to 22.

24. A method for treating wastewater applying a device according to anyone of claims 1 to 22.

## Patentansprüche

1. Vorrichtung zur Behandlung von Abwasser, des Filterbett-Typs, umfassend (i) ein Mittel zur Filtration des Abwassers, umfassend eine Schicht C2 aus partikulärem Material und eine Schicht C1 aus partikulärem Material, die über besagter Schicht C2 liegt, wobei die Korngröße der Schicht C2 geringer als die Korngröße der Schicht C1 ist, und (ii) ein Mittel, das die Diffusion von Sauerstoff erlaubt, in der Zwischenschicht zwischen besagten Schichten C1 und C2 verlegt ist und wenigstens eine Schicht aus partikulärem Material mit einer Korngröße umfasst, die größer als die Korngröße der Schicht C2 und größer als die Korngröße der Schicht C1 ist, wobei besagtes Mittel, das die Diffusion von Luft oder Sauerstoff erlaubt, außerdem ein System zur Belüftung der Schicht C2 umfasst, das mit der Atmosphäre über einen oder mehrere Wege, die bis zur Oberfläche der Vorrichtung reichen, in Verbindung steht.

2. Vorrichtung zur Behandlung von Abwasser gemäß Anspruch 1, in der das Mittel, das die Diffusion von Sauerstoff erlaubt, wenigstens zwei Schichten aus partikulärem Material unterschiedlicher Korngrößen, die größer als die Korngröße der Schicht C2 und der Schicht C1 sind, vorzugsweise Schotter oder Kies, umfasst.

3. Vorrichtung zur Behandlung von Abwasser gemäß Anspruch 2, in der die Dicke jeder Schicht aus partikulärem Material des Mittels, das die Diffusion von Sauerstoff erlaubt, etwa 0,2 m beträgt, wobei die erste Schicht ein partikuläres Material umfasst, dessen Korngröße zwischen etwa 10 und 25 mm oder 15 und 25 mm beträgt, und die zweite Schicht ein partikuläres Material umfasst, dessen Korngröße größer als die Korngröße der ersten Schicht ist.

4. Vorrichtung zur Behandlung von Abwasser gemäß Anspruch 3, in der die Korngröße der zweiten Schicht aus partikulärem Material des Mittels, das die Diffusion von Sauerstoff erlaubt, zwischen etwa 20 und 40 mm oder 30 und 60 mm beträgt.

5. Vorrichtung zur Behandlung von Abwasser gemäß einem der Ansprüche 1 bis 4, in der das Mittel (i) zum Filtrieren des Abwassers aufeinanderfolgende verschiedene Schichten mit einer Korngröße umfasst, die von oben nach unten folgendermaßen angeordnet sind:
- eine Schicht C1 aus partikulärem Material,
- eine Schicht C2 aus partikulärem Material mit einer Korngröße, die geringer als die Korngröße der Schicht C1 ist,
- eine Schicht C3 aus partikulärem Material mit einer Korngröße, die gleich oder größer als die Korngröße der Schicht C1 ist,
- gegebenenfalls eine Schicht C4 aus partikulärem Material mit einer Korngröße, die größer als die Korngröße der Schicht C3 ist, und
- gegebenenfalls eine Schicht C5 aus partikulärem Material mit einer Korngröße, die größer als die Korngröße der Schicht C4 ist,
und das Mittel (ii), das die Diffusion von Luft oder Sauerstoff erlaubt und zwischen der Schicht C1 und der Schicht C2 eingeschlossen ist, wenigstens eine Schicht aus partikulärem Material mit einer Korngröße umfasst, die größer als die Korngröße der Schicht C2 und größer als die Korngröße der Schicht C1 ist, wobei besagtes Mittel, das die Diffusion von Luft oder Sauerstoff erlaubt, außerdem ein System zur Belüftung der Schicht C2 umfasst, das mit der Atmosphäre über einen oder mehrere Wege, die bis zur Oberfläche der Vorrichtung reichen, in Verbindung steht.

6. Vorrichtung zur Behandlung von Abwasser gemäß einem der vorhergehenden Ansprüche, in der die Schicht C1 ein partikuläres Material mit einer Korngröße zwischen etwa 1 und 10 mm, vorzugsweise Schotter oder Kies, umfasst.

7. Vorrichtung zur Behandlung von Abwasser gemäß einem der vorhergehenden Ansprüche, in der die Schicht C2 ein partikuläres Material mit einer Korngröße zwischen etwa 0,1 und 6 mm umfasst.

8. Vorrichtung zur Behandlung von Abwasser gemäß einem der vorhergehenden Ansprüche, in der die Schicht C2 aus Sand besteht.

9. Vorrichtung zur Behandlung von Abwasser gemäß einem der Ansprüche 6 bis 8, in der die Schicht C4 ein partikuläres Material mit einer Korngröße zwischen etwa 10 und 25 mm, vorzugsweise zwischen etwa 10 und 20 mm oder zwischen etwa 15 und 25 mm, vorzugsweise Schotter oder Kies, umfasst.

10. Vorrichtung zur Behandlung von Abwasser gemäß einem der Ansprüche 6 bis 9, in der die Schicht C5 ein partikuläres Material mit einer Korngröße zwischen etwa 20 und 60 mm, vorzugsweise zwischen etwa 20 und 40 mm oder zwischen etwa 30 und 60 mm, vorzugsweise Schotter oder Kies, umfasst.

11. Vorrichtung gemäß einem der vorhergehenden Ansprüche, in der das Mittel, das die Diffusion von Luft oder Sauerstoff erlaubt, mit einem Ventilator oder einem System zur Injektion von Luft oder Sauerstoff, die/der von einem Kompressor geliefert wird, ausgerüstet ist.

12. Vorrichtung gemäß einem der vorhergehenden Ansprüche, umfassend ein oder mehrere zusätzliche Mittel zur Diffusion von Luft oder Sauerstoff, die in der Schicht C2 oder unter dieser vorhanden sind.

13. Vorrichtung gemäß einem der vorhergehenden Ansprüche, in der das Mittel, das die Diffusion von Luft oder Sauerstoff erlaubt, ein Drainagerohr für die Landwirtschaft, ein Drainagerohr für den Straßenbau, ein geschlitztes oder gelochtes Rohr, einen Hohlboden, eine Hohlkammer und/oder eine wabenförmige Struktur umfasst.

14. Vorrichtung gemäß einem der Ansprüche 9 bis 13, umfassend außerdem ein Mittel zur Injektion von Druckluft, um die Sandoberfläche zu entschlammen und die Zufuhr von Luft oder Sauerstoff zu verbessern.

15. Vorrichtung gemäß einem der vorhergehenden Ansprüche, umfassend ein Mittel zur Ableitung überschüssigen Wassers in Richtung Drainagesystem der Vorrichtung.

16. Vorrichtung gemäß Anspruch 15, in der das Mittel, das die Diffusion von Luft oder Sauerstoff erlaubt, mit einem Mittel zur Ableitung überschüssigen Wassers in Richtung Drainagesystem der Vorrichtung ausgerüstet ist.

17. Vorrichtung gemäß Anspruch 15 oder 16, in der das Mittel zur Ableitung eine höhenverstellbare Vorrichtung umfasst.

18. Vorrichtung gemäß einem der vorhergehenden Ansprüche, in der die Dicke der Schicht C1 zwischen etwa 0,20 m und etwa 0,6 m beträgt.

19. Vorrichtung gemäß einem der vorhergehenden Ansprüche, in der die Dicke der Schicht C2 zwischen etwa 0,15 m und etwa 0,4 m beträgt.

20. Vorrichtung gemäß einem der Ansprüche 4 bis 19, in der die Dicke der Schichten C3, C4 und C5 zwischen etwa 0,10 m und etwa 0,4 m beträgt.

21. Vorrichtung gemäß einem der vorhergehenden Ansprüche, wobei die Oberfläche der Vorrichtung mit Schilfpflanzen bepflanzt ist.

22. Vorrichtung gemäß einem der vorhergehenden Ansprüche, wobei die Vorrichtung außerdem eine Schicht aus organischem Material an der Oberfläche der Schicht C1 umfasst.

23. Kläranlage, umfassend eine Vorrichtung gemäß einem der Ansprüche 1 bis 22.

24. Verfahren zur Behandlung von Abwasser, das eine Vorrichtung gemäß einem der Ansprüche 1 bis 22 verwendet.
